# EUROPEAN PATENT APPLICATION

(11) **EP 4 553 588 A1**
(43) Date of publication of application: **14.05.2025**
(21) Application number: 24180756.9
(22) Date of filing: 07.06.2024
(51) Int. Cl.: G05B 15/02, F24F 11/64

(54) **SYSTEM AND METHOD FOR HVAC (HEATING, VENTILATION, AND AIR CONDITIONING) OPTIMIZATION**

(30) Priority: 09.11.2023 IN 202341076521
(71) Applicant: Bert Labs Private Limited, Bengaluru 560076 (IN)
(72) Inventor: KOCHAR, Rohit, 560076 Bengaluru (IN); BOROLE, Shailendra Pralhad, 411028 Pune (IN); NEELAVARA, Shreyas Acharya, 560050 Bengaluru (IN); CHAUDHURI, Proteek, 122017 Gurugram (IN); PRAKASH, Jai, 127021 Bhiwani (IN)
(74) Representative: Botti & Ferrari S.p.A.

(57) **Abstract**

A system (100) for HVAC optimization is disclosed. The system (100) may include a digital twin (112) of an HVAC system (114) installed in a premises (108). The digital twin (112) is based on design parameters, operational data, and PMV-based thermal comfort analysis. The system (100) further includes an RL agent (202) that is configured to receive and process at least real-time environmental conditions, occupancy patterns, and PMV value associated with the premises (108) of the HVAC system (114), identifying one or more optimal actions to adjust one or more HVAC parameters. The digital twin (112), driven by the identified optimal actions, may dynamically simulate the HVAC system (114) and the RL agent (202) may optimize operations of the HVAC system (114) based on the identified optimal actions, ensuring seamless and adaptive thermal comfort and energy efficiency management within the premises (108).

## Description

### CROSS-REFERENCE TO RELATED APPLICATIONS

The present application claims priority to Indian Patent Application No. 202341076521, filed to the Indian Patent Office on November 09, 2023, and entitled "SYSTEM AND METHOD FOR HVAC (HEATING, VENTILATION, AND AIR CONDITIONING) OPTIMIZATION", which is incorporated herein by reference in its entirety.

### FIELD OF THE INVENTION

The present invention generally relates to the field of environmental control systems and, more specifically, to a system and method for optimizing Heating, Ventilation, and Air Conditioning (HVAC) systems using a reinforcement learning agent and a digital twin framework. The invention aims to improve thermal comfort and reduce energy consumption in various environments, including but not limited to airports, office buildings, residential spaces, industrial spaces, commercial spaces, and warehouses.

### BACKGROUND OF THE INVENTION

Heating, Ventilation, and Air Conditioning (HVAC) systems play a critical role in maintaining indoor environmental quality, ensuring occupant comfort, and managing energy usage in diverse settings. However, achieving the delicate balance between thermal comfort and energy efficiency remains a significant challenge. Conventional HVAC systems often operate on fixed schedules and settings, leading to suboptimal comfort and excessive energy consumption.

Generally, balancing thermal comfort for occupants with energy efficiency is a complex task. Overcooling or overheating can lead to discomfort, while excessive energy consumption harms sustainability goals. Further, environments like airports, office buildings, residential spaces, industrial spaces, commercial spaces, and warehouses experience continuous changes in occupancy, weather, and occupant preferences. Traditional HVAC systems struggle to adapt effectively. Further, real-time data collection from various sensors and sources, including occupancy patterns, environmental conditions, and occupant feedback, can be overwhelming to process and analyze manually.

Accordingly, there is a need for leveraging advanced technologies to address these challenges. The present invention discloses an approach of integrating digital twin technology with reinforcement learning algorithms, creating intelligent HVAC optimization systems capable of adapting to changing conditions in real-time, and improving thermal comfort and reducing energy consumption in various environments.

### SUMMARY OF THE INVENTION

In accordance with one aspect of the present disclosure, a system for HVAC optimization is disclosed. The system may include a digital twin of an HVAC system installed in a premises. The digital twin may be based on at least one of design parameters, operational data, and Predicted Mean Vote (PMV) based thermal comfort analysis. The system may further include an RL agent that is configured to receive and process at least real-time environmental conditions, occupancy patterns, and PMV value associated with the installation premises of the HVAC system, identifying one or more optimal actions to adjust one or more HVAC parameters. The digital twin, driven by the identified optimal actions, may dynamically simulate the HVAC system and the RL agent may optimize operations of the HVAC system based on the identified optimal actions, ensuring seamless and adaptive thermal comfort and energy efficiency management within the installation premises.

In an embodiment, the digital twin may integrate architectural schematics, HVAC equipment specifications, and spatial layouts to build a comprehensive virtual replica of the HVAC system. In an embodiment, the digital twin may be simulated by using a physics-based model, a mathematics-based model, and a data-based model.

In an embodiment, the system may further include one or more sensors and IoT (Internet of Things) devices strategically placed within the installation premises to capture real-time data including at least the environmental conditions, occupancy patterns, and operational data, and performance data.

In an embodiment, the digital twin may utilize historical operational and performance data of the one or more HVAC equipment of the HVAC system to enhance accuracy of simulations and predictive modelling.

In an embodiment, the digital twin may employ cloud-based storage and processing, enabling seamless collaboration and data sharing among multiple stakeholders involved in the premises management.

In an embodiment, the PMV value may be calculated based on at least real-time monitoring of air temperature, radiant temperature, air humidity, air speed, clothing insulation, and metabolic activity, utilizing sensors and IoT devices distributed throughout the installation premises. Further, the PMV value may be adjusted based on the occupancy patterns to reflect anticipated thermal comfort needs of one or more individuals.

In an embodiment, the system may further include a nationality prediction device for predicting nationality of the one or more individuals. The predicted nationality may be used for real-time computation of nationality-specific thermal comfort indices, enabling the PMV calculation to account for cultural preferences in the thermal comfort.

In an embodiment, the PMV calculation may integrate occupant feedback data, gathered through user interfaces and surveys, to refine accuracy of thermal comfort predictions.

In an embodiment, the PMV calculation may employ one or more machine learning algorithms to analyze at least one of the monitored data and historical PMV data, enhancing the system's ability to predict thermal comfort requirements under varying conditions.

In an embodiment, the RL model may include an RL agent that utilizes the PMV value, energy consumption, and air differential pressure as an objective function, optimizing the HVAC parameters to achieve desired PMV levels within the installation premises.

In an embodiment, the RL agent may employ deep reinforcement learning techniques, leveraging neural networks to process PMV data and make informed decisions regarding HVAC adjustments.

In an embodiment, the RL agent may adapt its strategies based on historical PMV convergence, ensuring continuous improvement in balancing thermal comfort and energy efficiency.

In an embodiment, the RL agent may incorporate PMV mapping data to dynamically adjust temperature and airflow settings in different zones of the installation premises, responding to diverse thermal comfort requirements.

In an embodiment, the RL agent may integrate PMV data with occupancy patterns, optimizing HVAC operations to accommodate movement of the one or more individuals within the installation premises, ensuring consistent thermal comfort levels.

In an embodiment, the design parameters may include specifications of at least one of an air conditioner, a compressor, a condenser, a thermal expansion valve, an air handling unit, and a chiller unit of the HVAC system.

In an embodiment, the operational data refers to the information that represents the real-time functioning of the HVAC system. This includes: (1) temperatures: data on various temperature points such as coil temperature, return air, and supply air temperatures, (2) flow rates: rate at which air or chilled water is pumped through the system, (3) pressure levels: differential pressures across fans and filters, as well as chilled water systems including pump pressures, (4) system statuses: on/off status or modulating levels of different components such as compressors, fans, and valves, and (5) energy consumption: power usage data of the HVAC components like air handling units, chillers, and fans. For example, the operational data may include real-time data related to at least one of coil temperatures, return air temperature, supply air temperature, chilled water supply temperature, chilled water return temperature, zone temperatures, pump flow rate, and relevant pressures.

In an embodiment, the performance data refers to the effectiveness and efficiency of the HVAC system over time. It includes: (1) energy efficiency: metrics like the Energy Efficiency Ratio (EER), Coefficient of Performance (COP), or Seasonal Energy Efficiency Ratio (SEER) that indicate how effectively the system uses energy, (2) maintenance records: historical data on repairs, part replacements, and regular maintenance activities, (3) load data: information on the heating or cooling load the system has been handling over time, which can vary due to external temperatures or internal gains, (4) historical temperatures and pressures: long-term data on temperatures and pressures that show trends, such as seasonal variations or the impact of maintenance activities, and (5) system lifespan: data indicating the operational age of various components, which can be used for predictive maintenance and life cycle analysis.

In an embodiment, the RL agent may generate the optimal actions by simulating various HVAC scenarios based on the real-time environmental data, occupancy patterns, and PMV values.

In an embodiment, the optimal actions may include adaptive HVAC parameter suggestions, providing instant recommendations for adjusting temperature, airflow, and operation of one or more HVAC equipment of the HVAC system to achieve the optimal thermal comfort and energy efficiency.

In an embodiment, the optimal actions may be validated over the digital twin, and then from the digital twin are communicated to a control interface accessible to the one or more HVAC equipment, enabling seamless integration with the one or more HVAC equipment, and further enabling automated adjustments to at least one of temperature, fan speed, and other operational parameters in response to changing conditions.

These and other features and advantages of the present disclosure may be appreciated from a review of the following detailed description of the present disclosure, along with the accompanying figures in which like reference numerals refer to like parts throughout.

### BRIEF DESCRIPTION OF THE DRAWINGS

The novel features which are believed to be characteristic of the present invention, as to its structure, organization, use, and method of operation, together with further objectives and advantages thereof, will be better understood from the following drawings through which various preferred embodiments of the present invention will now be illustrated and described by way of example. It is expressly understood, however, that the drawings are for the purpose of illustration and description only and are not intended as a definition of the limits of the present invention. Embodiments of the present invention will now be described by way of example(s) in association with the accompanying drawings in which:
Figure 1 is a diagram that illustrates a system environment in which various embodiments of the present invention are practiced.
Figure 2 is a diagram that illustrates a reinforcement learning (RL) model, in accordance with an embodiment of the present invention.
Figure 3 is a diagram that illustrates optimization of an HVAC system in an installation premises by utilizing an RL agent, in accordance with an embodiment of the present invention.
Figure 4a is a diagram that illustrates optimization of an air conditioner of the HVAC system by utilizing the RL agent, in accordance with an embodiment of the present invention.
Figure 4b is a diagram that illustrates optimization of a thermal expansion valve (TXV) of the HVAC system by utilizing the RL agent, in accordance with an embodiment of the present invention.
Figure 4c is a diagram that illustrates optimization of an air handling unit (AHU) of the HVAC system by utilizing the RL agent, in accordance with an embodiment of the present invention.
Figure 4d is a diagram that illustrates optimization of a chiller of the HVAC system by utilizing the RL agent, in accordance with an embodiment of the present invention.
Figure 5 is a diagram that illustrates a flowchart of a method for optimizing the HVAC system, in accordance with an embodiment of the present invention.

### DETAILED DESCRIPTION OF THE INVENTION

The present invention will now be described more fully hereinafter with reference to the accompanying drawings, which form a part hereof, and which show, by way of illustration, specific exemplary embodiments by which the invention may be practiced. This invention may, however, be embodied in many different forms and should not be construed as limited to the embodiments set forth herein; rather, these embodiments are provided so that this disclosure will be thorough and complete, and will fully convey the scope of the present invention to those skilled in the art. Among other things, the present invention may be embodied as methods, systems, or devices, or a combination thereof. Accordingly, the present invention may take the form of an entirely hardware embodiment, an entirely software embodiment, or an embodiment combining software and hardware aspects. The following detailed description is, therefore, not to be taken in a limiting sense.

The invention will now be described with reference to the accompanying drawings which should be regarded as merely illustrative without restricting the scope and ambit of the present invention.

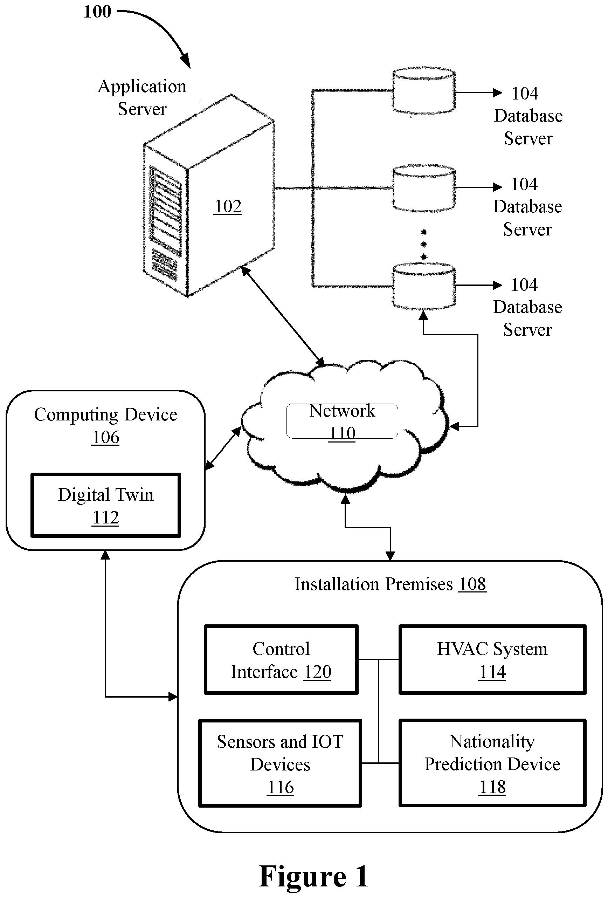

Figure 1 is a diagram that illustrates a system environment 100 in which various embodiments of the present invention are practiced. The system environment 100 may include one or more servers such as an application server 102 and a database server 104. The system environment 100 may further include a computing device 106 and an installation premises 108. The application server 102, the database server 104, the computing device 106, and the premises 108 may be configured to communicate with each other via a communication network such as a network 110.

The application server 102 is a framework, a type of software engine, which delivers applications to client computers or devices. It may act as a middle layer between the end-user interface and the backend database and business applications, enabling the hosting and delivery of high-level applications, often web based. The application server 102 may be configured to primarily manage the logic of one or more applications. This means that the application server 102 may be configured to handle the execution of program commands, computation, data retrieval, and performance tasks. The application server 102 may be further configured to facilitate the connection between front-end interfaces and back-end databases. For instance, IBM WebSphere Application Server can connect to various databases like Oracle, SQL Server, or DB2 to fetch and update data as required by the application. The application server 102 may be further configured to provide various middleware services like transaction management, messaging services, and authentication. The application server 102 may be further configured to enable applications to scale to handle increased loads and can manage sessions across multiple servers. The application server 102 may be further configured to include an API gateway or management tools to control access to one or more APIs. In some applications, the application server 102 may also assist in delivering content to one or more users. The application server 102 may be further configured to provide a complete development and runtime environment for the one or more applications. For example, Google App Engine offers a fully managed platform as a service (PaaS) that includes an application server for developing and hosting web applications. The application server 102 may be further configured to offer features to secure the one or more applications, like SSL encryption, secure authentication mechanisms, and authorization services. The application server 102 may come with monitoring tools to help track the performance and health of the one or more applications and may provide logging and auditing services. Examples of the application server 102 may include, but are not limited to, Java EE Application Servers, Microsoft Windows-based Application Servers, Platform as a Service, SAP NetWeaver for enterprise applications, and Zend Server for PHP applications. Each application server 102 may offer a unique set of services and performance characteristics tailored to specific application requirements. Choice of the application server 102 often depends on the needs of the application, the programming language used, the expected load, and the necessary scalability requirements.

In an exemplary embodiment, the application server 102 may serve as a robust platform for hosting and executing various models, which may include machine learning (ML) models, deep learning (DL) models, reinforcement learning (RL) models, and other computational models. The application server 102 may be involved in a data processing pipeline that covers collection, preprocessing, transformation, and storage of data. The application server 102 may be capable of running different types of models. These could be algorithms or programs designed for specific tasks such as predictive analytics, simulations, or other data processing. The application server 102 may be designed to receive a variety of data inputs from multiple sources. For example, environmental data may come from one or more sensors 116 that monitor conditions like temperature, humidity, or air quality, equipment operational data may include information from industrial machines, indicating their performance, condition, and operating parameters, and thermal comfort analysis may include data related to the heating, ventilation, and air conditioning (HVAC) systems of an environment, ensuring the environment is comfortable for occupants. The data may also come from Internet of Things (IoT) devices. The application server 102 may be equipped to handle unstructured data, which is data that does not have a predefined model or format. The application server 102 may be configured to perform preprocessing that includes cleaning the data (removing irrelevant or erroneous data), normalization (scaling data to a specific range), and transforming it into a format suitable for analysis or model input. The application server 102 may use one or more containers, which are isolated environments for running applications, to process data. This may help in managing dependencies and ensuring consistency across different computing environments. It applies data transformation functions to the processed data. This may involve converting raw data into features suitable for models to understand or structuring the data according to a predefined schema. The structured data may then be stored in a predefined format, which could be in databases or data warehouses, making it easier for retrieval, further analysis, or reporting.

In the context of an HVAC system 114, the application server 102 may be configured to manage and optimize the environment within a facility. For example, the application server 102 may receive environmental data from sensors and IoT devices 116 monitoring temperature, humidity, air speed, and the like. Further, the application server 102 may receive user data from the sensors and IoT devices 116 monitoring clothing insulation and metabolic activity. Further, the application server 102 may receive occupancy data from the sensors and IoT devices 116 monitoring occupancy patterns in the environment. Further, the application server 102 may collect the equipment operational data from sensors and IoT devices 116 monitoring the HVAC components. The application server 102 may preprocess the unstructured data collected from various sources. This could involve filtering out noise from sensor data, normalizing readings from different types of equipment, or converting free-form text feedback into quantifiable metrics. Further, using containers, the application server 102 may process the cleaned data, applying transformation functions to create a structured dataset. This may involve standardizing data formats, timestamping, and organizing data into relational structures for easy access and analysis. The transformed data may then be stored in a structured form, likely in a database, where it can be easily accessed for real-time decision-making or historical analysis. The application server 102 or the RL model running on the application server 102 may then use the structured data to make decisions. For instance, it may send one or more commands to the HVAC system 114 to adjust settings based on real-time data, like reducing the air conditioning in an unoccupied area. It may also trigger one or more alerts for maintenance if the equipment operational or performance data indicates a potential issue with any HVAC component. Further, by analyzing the data and running models, the application server 102 or the RL model running on the application server 102 may optimize for energy efficiency while maintaining thermal comfort, finding the best balance between cost savings and occupant comfort. It may also contribute to predictive maintenance of the HVAC system 114 by using the data to foresee potential breakdowns or inefficiencies. In this scenario, the application server 102 acts as an intelligent control system for the HVAC, leveraging data and computational power to maintain an optimal environment. It also ensures that the system is responsive to both the immediate conditions and predictive insights, resulting in a smart, adaptive HVAC management system.

The database server 104 is a computer system that provides other computers and applications with services related to accessing and retrieving data stored in databases. It is a key component in a client-server architecture, where it is dedicated to managing database resources, executing database operations, and ensuring data integrity and security. Examples of the database server 104 include, but are not limited to, Relational Database Servers (such as Oracle Database, Microsoft SQL Server, MySQL, and PostgreSQL), NoSQL Database Servers (such as MongoDB and Cassandra), and In-Memory Databases (such as Redis and SAP HANA). The database server 104 plays a crucial role in housing all the data that the application server 102 needs to function effectively. It is the repository of current and historical data, which is essential for monitoring the system's performance, optimizing operations, and ensuring comfort and efficiency.

In the context of managing the HVAC system 114, the database server 104 may be responsible for storing all the unstructured or structured data, such as environmental readings, equipment statuses, equipment operation data, clothing insulation, metabolic activity, nationality data, and user preferences for thermal comfort. The database server 104 may be configured to handle queries from the application server 102, retrieving data for further processing or analysis. For example, when the application server 102 needs historical temperature data to make a predictive model for the HVAC system 114, it may retrieve this data from the database server 104. The database server 104 may be further configured to manage updates to the database, ensuring that any new data sent from the application server 102 or the computing device 106 or the premises 108 is accurately recorded and that existing data is updated or deleted according to the application's needs. The database server 104 could be further configured to manage multiple requests at the same time, ensuring that requests are processed reliably and without conflict. The database server 104 may be further configured to enforce security policies, controlling access to the data, and ensuring that only authorized applications and users can retrieve or modify the data. The database server 104 may be further configured to regularly back up the data to prevent data loss and provide mechanisms for data recovery in case of server failure, which may be critical for maintaining the continuous operation of the HVAC system 114.

A person having ordinary skills in the art would understand that various functionalities of the application server 102 and the database server 104 may be consolidated into a single, unified server platform. This integrated server may be configured to possess the capabilities of both processing application logic and managing data storage without any inherent limitations. It may seamlessly handle the execution of models, manage data preprocessing, and perform database operations such as data storage, retrieval, and management. This approach may simplify the architecture, reduce latency in data access, and streamline maintenance and scalability concerns by having both functionalities coexist on one robust and optimized server system.

The computing device 106 is an electronic device that is capable of processing, storing, and retrieving data to perform some kind of computations and operations. Such devices usually allow for input and output operations, making them interactive tools for a wide array of applications. One or more users may input data into the computing device 106 through various means, such as keyboards, touch screens, mice, voice recognition, sensors, and cameras. The computing device 106 may convey the results of their computing processes to the users via outputs like displays, speakers, printers, and actuators. Examples of the computing device 106 may include, but are not limited to, personal computer(s), desktop(s), laptop(s), smartphone(s), tablet(s), or wearable device(s).

In an exemplary embodiment, the computing device 106 may be used by a user to create a digital twin 112 of an environment (such as the premises 108), a digital twin 112 of an installed system (such as the HVAC system 114) in the environment, or a digital twin 112 of an equipment (such as a chiller or air handling unit) of the installed system in the environment. In an embodiment, the computing device 106 may be configured to run software that allows the user to design a virtual representation of the premises 108 (such as an airport, office building, residential space, industrial space, commercial space, warehouse, or the like), including its structural elements and systems like HVAC, lighting, and security.

In an exemplary embodiment, the user may create the digital twin 112 with the following steps: (1) Data collection: Gather data from the physical environment 108 via the sensors and IoT devices 116 or manual input. (2) Modeling software: Use specialized software on the computing device 106 to build the digital twin model 112. For structural elements, CAD software might be used, while simulation software might be employed for systems and operations. (3) Integration: Incorporate live data feeds into the model to reflect the real-time status of the physical counterpart. (4) Simulation and Analysis: Run simulations on the computing device 106 to predict outcomes, analyze scenarios, and plan for interventions. (5) Refinement: Adjust the model based on feedback and analysis to ensure it accurately represents the physical environment 108 and can predict its behavior reliably.

Once the digital twin 112 has been established, the computing device 106 may be used to simulate scenarios, analyze system performance, and optimize operations based on the data received from the physical counterpart. In some embodiments, the user may use the computing device 106 to provide one or more inputs to adjust one or more parameters of the digital twin 112 and perform manual interventions when automated systems do not suffice, or when unique or unforeseen circumstances arise. The computing device 106 may be configured to trigger one or more operations in the real-world systems by sending one or more commands from the digital twin's (112) interface, effectively allowing the user to control one or more aspects of the premises 108 remotely.

In another exemplary embodiment, the computing device 106 may be configured to execute an RL model, or other AI, ML, or DL model(s) that can learn and optimize the system operations by interacting with the digital twin 112 in real-time, using trial and error to find the best strategies. The computing device 106 may be used to analyze one or more outputs from the RL model or from some other model(s), visualizing data to assess performance or to plan for improvements in efficiency and user experience. In some embodiments, the user may manually validate the outputs to ensure that the proposed strategies are feasible and do not compromise safety or service quality.

In another exemplary embodiment, the computing device 106 may be configured to predict when one or more parts of the premises 108 or its HVAC system 114 might fail or need maintenance, minimizing downtime and repair costs. Further, by monitoring and adjusting the digital twin 112, the user may identify one or more ways to reduce energy consumption while ensuring thermal comfort, thus saving costs, and reducing the environmental impact. The user may also play a role in security management, using the digital twin 112 to simulate and plan for emergency scenarios.

In another exemplary embodiment, the computing device 106 may be configured to run one or more analysis tools that can help in improving the user experience by simulating foot traffic, optimizing navigation within the premises 108, and enhancing comfort. By integrating various data sources and providing a comprehensive control interface, the computing device 106 may enable the user to create and interact with the digital twin 112 effectively, serving as a bridge between the physical and virtual environments that can enhance understanding, decision-making, and operational efficiency.

The premises 108 refers to an environment where various systems and services are installed to make the space functional and habitable. This can include infrastructure such as airports, commercial buildings like hotels, malls, hospitals, and office spaces but should not be construed as limiting to the scope of the present invention. The premises 108 may include one or more HVAC systems such as the HVAC system 114, one or more sensing and monitoring devices such as the sensors and IoT devices 116, one or more predictive devices such as a nationality prediction device 118, and one or more control interfaces such as a control interface 120 but should not be construed as limiting to the scope of the present invention.

In an embodiment, the HVAC system 114 may be installed in the premises 108. The HVAC system 114 may be installed for maintaining indoor environmental comfort by regulating temperature, airflow, and air quality. The one or more components of the HVAC system 114 may include, but are not limited to, one or more boilers or furnaces to provide heat, air conditioners to cool indoor air, fans and blowers that move air throughout the space, ductwork i.e., channels that transport air, thermostats to control the temperature, filters to remove particulates from the air, humidifiers/dehumidifiers to adjust the humidity levels, and chillers to remove heat from a liquid and transfers it to the atmosphere or to another fluid.

In an embodiment, the sensors and IoT devices 116 may be installed in the premises 108. The sensors and IoT devices 116 are an integral part of the premises 108 including the HVAC system 114. They are used for sensing things and devices. The sensor attains a physical parameter and converts it into a signal suitable for processing (e.g., electrical, mechanical, optical) the characteristics of any device or material to detect the presence of a particular physical quantity. The output of the sensor is a signal which is converted to a human-readable form like changes in characteristics, changes in resistance, capacitance, impedance, etc. The sensors and IoT devices 116 are essential for the HVAC system 114, as they help to monitor and control the temperature, humidity, air quality, and pressure of the indoor environment. There are various types of sensors such as accelerometers, air quality sensors, biomedical sensors, cameras, chemical sensors, electric current sensors, flow sensors, gyroscopes, humidity sensors, level sensors, motion sensors, pressure sensors, proximity sensors, occupancy sensors, and temperature sensors. They can help to improve the performance, efficiency, and reliability of the HVAC system 114 and provide a comfortable and healthy indoor environment for the occupants.

In an embodiment, the nationality prediction device 118 may be installed in the premises 108. The nationality prediction device 118 is a device that can predict the nationality of the one or more individuals in the premises 108. Such a device may use machine learning techniques to analyze the patterns and characteristics and assign them to different nationality classes. For example, a nationality prediction device 118 may use a bidirectional LSTM neural network. Features that may be explored for predicting the nationality of the one or more individuals may include, but are not limited to, name features, location features, language features, facial or other biometric features, clothing style-based features, language-based features, or the like.

In an embodiment, the control interface 120 may be installed in the premises 108. This serves as a command center for the HVAC system 114, where adjustments to the system's operation are made. It is the communication hub that receives instructions to alter one or more HVAC settings. The instructions may be received from the application server 102, the database server 104, or the computing device 106 via the network 110 without limiting the scope of the present invention.

The network 110 is a communication channel between two or more computers or devices that are linked together to share resources, exchange files or commands, or allow electronic communications. The computers on the network 110 may be linked through cables, telephone lines, radio waves, satellites, or infrared light beams. Examples of wired networks may include, but are not limited to, ethernet networks, fiber optic networks, telephone networks, power line communications (PLC), and coaxial networks. Examples of wireless networks may include, but are not limited to, Wi-Fi networks, cellular networks, Bluetooth, satellite networks, near field communication (NFC), Zigbee and Z-Wave. The network 110, be they wired or wireless, plays a critical role in the connectivity of devices and servers in the system environment 100. In an installation like an airport, the network 110 may be configured to facilitate communication between sensors, actuators, HVAC systems, security systems, and the various servers that manage operations and data storage. Further, the network 110 may be configured to support the transfer of real-time data to application server 102 where it is processed, analyzed, and turned into actionable insights. Further, the network 110 may be configured to allow the database server 104 to receive and store data and serve it upon request to application server 102 or end-user devices. Further, the network 110 may be configured to enable end-user devices (such as the computing device 106) to interact with the system for monitoring, control, and manual intervention. This interconnectedness ensures that all components of the system environment 100 can work cohesively to maintain operations, gather data, process inputs, and enable a smart, responsive infrastructure.

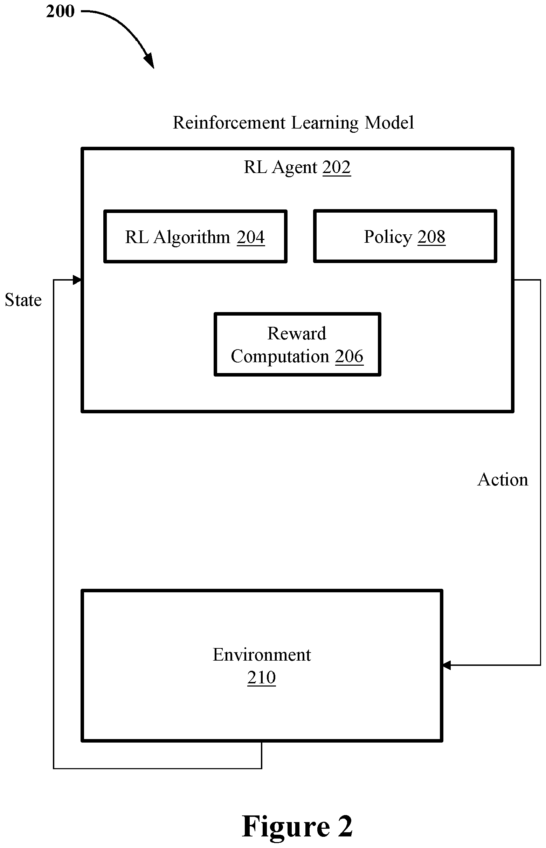

The described system operates as an advanced HVAC optimization tool utilizing the digital twin 112 and/or the reinforcement learning (shown by 200 in Figure 2) to enhance comfort and energy efficiency within the premises 108.

In an embodiment, the system includes the digital twin 112 of the HVAC system 114 installed within the premises 108, such as an airport, office building, or shopping mall. This digital twin 112 is a virtual model that mirrors the real-world HVAC system 114, constructed using one or more of the detailed architectural schematics, equipment specifications, spatial layouts, environmental data, operational data, and performance data. It is designed to respond dynamically to changes in one or more environmental conditions, occupancy, and thermal comfort levels, as indicated by the PMV (Predicted Mean Vote) index.

In an embodiment, the system is further equipped with a network of sensors and IoT devices 116 distributed throughout the premises 108. These sensors and IoT devices 116 may be configured to collect real-time data on environmental conditions (like temperature, air speed, and humidity), occupancy patterns, and equipment performance.

In an embodiment, the system is further equipped with an RL agent (as shown by 202 in Figure 2) that is configured to receive the data and process it to determine optimal HVAC settings. The RL agent 202 may use deep reinforcement learning techniques, incorporating neural networks (or some other techniques) to analyze at least one of the PMV data, energy consumption, air pressure differences, historical operational data, and historical performance data. By learning from past actions and their outcomes, the RL agent 202 may continuously refine its strategy to improve the balance between thermal comfort and energy efficiency. The RL agent 202 may be configured to identify one or more actions that adjust one or more HVAC parameters such as temperature, airflow, pressure, and humidity levels to achieve desired PMV levels and energy consumption targets. The RL agent 202 may be hosted on a local server associated with the premises 108 or the HVAC system 114, or on a global server that is outside the premises 108 or the HVAC system 114.

In an embodiment, the system is further equipped with the control interface 120, which is accessible to the actual HVAC equipment. This allows for automated, real-time adjustments to the one or more operational parameters such as temperature settings, fan speeds, and other variables. The system's goal is to ensure that the HVAC operations are optimized for energy efficiency while maintaining or enhancing thermal comfort levels for the occupants.

In operation, the system begins with the creation of the digital twin 112 that replicates the physical HVAC system 114 within the premises 108. This involves inputting the design parameters of the system's components such as air conditioners, compressors, condensers, expansion valves, air handling units, filters, and/or chillers. These parameters may be complemented with one or more architectural layouts, equipment specifications, and/or spatial positioning of the HVAC components, creating a multi-dimensional model that can be visualized in one-dimension (1D), two-dimension (2D), or three-dimension (3D) interfaces. Further, the sensors and IoT devices 116 may be strategically placed to monitor various data points such as environmental conditions like temperature, airflow, and humidity, occupancy levels, and operational performance data from HVAC components (e.g., temperatures across coils, supply and return air temperatures, chilled water supply temperature, chilled water return temperature, zone temperatures, pump flow rate, fan differential pressure, and chiller pump pressures). The real-time data may be captured continuously and fed into the system, where the RL agent 202 may be configured to process and analyze the real-time captured data. The PMV calculations may also be executed in real-time, incorporating sensor data and considering individual comfort factors, such as clothing insulation and metabolic rates. The RL agent 202 may be further configured to process the influx of data, learning from current conditions, past experiences, and predictive models to determine the optimal HVAC settings. It uses at least one of energy consumption, air differential pressure, PMV values, occupancy patterns, and other KPIs to formulate an objective function, seeking to strike a balance between energy efficiency and occupant comfort. The one or more identified adjustments identified by the RL agent 202 may be simulated first within the digital twin 112, testing their efficacy and impact on the virtual model. This simulation phase may allow the system to forecast the outcomes of changes without implementing them physically, thus avoiding unnecessary risks.

Further, by incorporating historical data, the system enhances its predictive capabilities, using machine and deep learning algorithms to refine its forecasting for future comfort requirements and energy utilization patterns. Occupancy patterns and cultural data may also be integrated into the PMV computation. Furthermore, nationality prediction and feedback mechanisms (such as surveys and user interfaces) offer additional data points that allow the system to tailor comfort settings to the preferences of diverse groups.

The validated optimal actions may be communicated to the HVAC control system via the control interface 120. This enables real-time adjustments to the one or more operational parameters such as temperature, airflow rates, pressure requirements, and equipment schedules. Adaptive suggestions may include precise temperature setpoints, variable airflow rates, and even equipment start/stop times to optimize energy use and comfort simultaneously. The RL agent 202 may communicate with the HVAC control interface 120 to implement the one or more adjustments. These changes may be automated, requiring minimal to no human intervention, and may be scaled across different zones of the premises 108 to account for varied comfort needs. Further, the system does not stagnate, it continuously learns from the implemented actions, outcomes, and new data, ensuring that the strategy for the HVAC optimization is ever improving and adapting to changing conditions. Further, by employing cloud-based storage and processing, the system enables multiple stakeholders to access the digital twin 112, observe simulations, and contribute to decision-making processes. Further, the RL agent 202 dynamically adjusts settings across different zones in response to the thermal comfort requirements and occupancy patterns, achieving a granular level of thermal comfort management. The agent's ability to simulate various scenarios and converge to the relevant PMV targets while reducing power consumption embodies a sophisticated, responsive, and intelligent HVAC management system.

Figure 2 is a diagram that illustrates an RL model 200, in accordance with an embodiment of the present invention. In reinforcement learning, an agent is configured to learn to make decisions by performing one or more actions in an environment to achieve a goal. The RL model 200 comprises several key components such as the RL agent 202. This is the decision-maker that learns from the environment through interactions. The RL agent 202 executes RL algorithms 204 and makes observations, takes actions, and receives feedback in the form of rewards. The environment 210 is everything the RL agent 202 interacts with and is external to the RL agent 202. In the RL model 200, the environment 210 represents the problem space or context in which the RL agent 202 may operate. Further, a state is a concrete and immediate description of the situation in which the RL agent 202 finds itself. It is the specific condition or context within the environment 210 at a particular time. Further, actions are a set of possible moves or decisions the RL agent 202 may make in any given state. Each action taken by the RL agent 202 may lead to a new state and a corresponding reward.

The reward computation 206 may be a feedback signal to the RL agent 202 that rates the success of an action. The reward function computes this signal, which is used to guide the agent's learning process. It incentivizes the RL agent 202 to make optimal decisions that will maximize cumulative rewards over time. In an embodiment, the reward function may be manually specified by the designer, based on domain knowledge. In another embodiment, the reward function may be learned from expert demonstrations, by inferring the underlying preferences and objectives of the expert. This is a data-driven method that can avoid the difficulties of handcrafting rewards, but it requires access to high-quality and diverse demonstrations. In another embodiment, the reward function may be based on the agent's intrinsic motivation to explore and learn new things, rather than on extrinsic rewards from the environment 210. This is a self-supervised method that can enable the agent to discover novel and useful skills. In another embodiment, the reward function may be composed of multiple sub-goals or criteria, each with its own weight or importance. This is a flexible and expressive method that can capture the trade-offs and complexities of real-world problems.

Further, a policy 208 is a strategy that the RL agent 202 employs to decide its actions at each state. It is essentially a mapping from one or more states to one or more corresponding actions, and the goal of the RL agent 202 is to learn the policy 208 that maximizes the expected sum of rewards over time.

In some embodiments, algorithms such as PPO (Proximal Policy Optimization), SAC (Soft Actor-Critic), and others may be used to compute the reward function, which is the feedback signal that guides the agent's learning process. PPO is an on-policy algorithm that uses a clipped surrogate objective to update the policy in a stable and efficient way. PPO can implicitly encourage exploration by using a stochastic policy and an entropy coefficient in the objective function. PPO can handle both discrete and continuous action spaces, and it is robust to hyperparameters and easy to implement. SAC is an off-policy algorithm that uses entropy regularization to optimize a stochastic policy and a value function in an actor-critic framework. SAC explicitly maximizes the entropy of the policy, which means that it seeks to act as randomly as possible while still achieving the goal. SAC can handle only continuous action spaces, and it is more sample-efficient than PPO, meaning that it can learn a good policy with fewer interactions with the environment 210. Deep Q-Network (DQN) is an off-policy algorithm that uses a deep neural network to approximate the optimal action-value function, which is the expected return for each action in each state. DQN does not optimize the entropy of the policy, but it uses an epsilon-greedy strategy to balance exploration and exploitation. DQN can handle only discrete action spaces, and it is less sample-efficient than SAC, but more sample-efficient than PPO. Advantage Actor-Critic (A2C) is an on-policy algorithm that uses two neural networks: one for the policy and one for the value function. A2C does not optimize the entropy of the policy, but it uses a stochastic policy and an entropy coefficient in the objective function. A2C can handle both discrete and continuous action spaces, and it is more sample-efficient than PPO, but less sample-efficient than SAC and DQN.

Data collection is a critical process that involves gathering a variety of information from different sources within the premises 108. This includes the real-time environmental conditions like temperature, humidity, and air speed, the occupancy data such as the number of people in a zone and their movement patterns, and the operational data from the HVAC system 114. The sensors and IoT devices 116 deployed throughout the premises 108 continuously capture this data, which is then transmitted to a central database such as the database 104. Once collected, the data undergoes preprocessing to ensure it is clean and structured for analysis. Preprocessing may include, but is not limited to, filtering out noise, dealing with missing values, and normalizing the data. Missing data may be handled by imputation methods where the system predicts the missing value based on the available data, or by using predictive models like the digital twin 112 that can simulate the missing data points. Further, invalid data, identified through anomaly detection algorithms, may be either corrected or removed to prevent it from skewing the analysis. The structured data is then used to train and learn the RL agent 202. Training may involve defining a reward function that encapsulates the goals (such as energy efficiency and occupant comfort) of the system and allowing the RL agent 202 to interact with the simulated environment or digital twin 112 of the HVAC system 114. The RL agent 202 may be configured to explore different strategies and learn from the outcomes of its actions through trial and error. It may receive positive rewards for actions that lead to the desired outcomes and negative rewards for less optimal outcomes. The learning process is iterative and involves continuously updating the agent's policy, which is a mapping from states of the environment 210 to the actions the RL agent 202 should take. Over time, the RL agent 202 may identify the best policies that maximize the cumulative reward, which corresponds to the optimal operation of the HVAC system 114. The RL agent 202 may use the RL algorithms 204 such as Q-learning, Deep Q Networks (DQN), or Policy Gradients, depending on the complexity of the task and the richness of the data available. After sufficient training, the RL agent's (202) policy may converge to a state where it can reliably make decisions that optimize the HVAC's performance in real time, even as environmental conditions and occupancy patterns change. The RL agent's (202) training may continue as it is deployed, allowing it to adapt to new data and potentially changing objectives, ensuring ongoing optimization and efficiency.

In the context of the HVAC system 114 installed in an airport environment, a state may include one or more of the air temperature, radiant temperature, air humidity, air speed, clothing insulation, metabolic activity, occupancy of various zones, time of day, real-time status of the HVAC equipment, or real-time operational parameters of the HVAC equipment. Each state may encapsulate all the information necessary to decide about adjusting the HVAC controls. Further, the one or more actions may include adjusting the temperature setpoints, changing fan speeds, modifying the flow rate of chilled water, or switching certain HVAC components ON or OFF. Each action directly affects the environment i.e., the physical space of the airport, and thereby changes the state. The reward computation 206 may be based on achieving a balance between energy efficiency and passenger comfort, along with meeting other KPIs and equipment constraints, if any. For example, a reward may be given for maintaining optimal temperature and humidity levels while minimizing energy use. The environment 210 may be a database or an actual physical space or a virtual space (i.e., the digital twin 112) of the HVAC system 114, including all the controllable and non-controllable factors that can affect or be affected by the agent's actions. The RL agent 202 may be configured to continuously interact with the environment 210, choosing the one or more actions based on its policy 208, observing the outcomes (new states), and receiving rewards. Over time, through trial and error and with the goal of maximizing cumulative rewards, the RL agent 202 may be configured to refine its policy 208, leading to more optimal actions. In context of the HVAC system 114, this means learning to maintain comfort efficiently, adapting to changing conditions within the airport such as fluctuating occupancy, passenger nationality, outdoor weather conditions, and other variables.

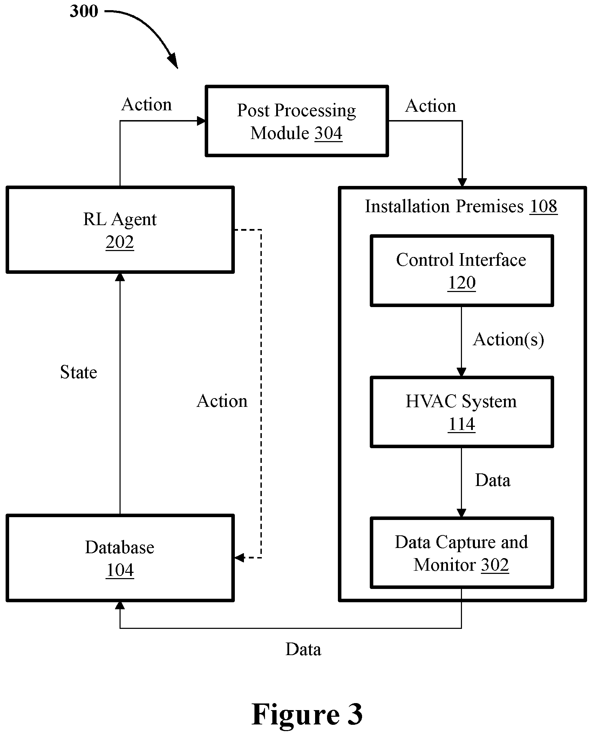

Figure 3 is a diagram that illustrates an optimization system 300 of the HVAC system 114 in the premises 108 by utilizing the RL agent 202, in accordance with an embodiment of the present invention. As shown, the system utilizes the RL agent 202, the database 104, a post-processing module 304, and the premises 108 equipped with the control interface 120 and the HVAC system 114 enhanced by a data capture and monitoring system 302 (powered by the sensors and IoT devices 116 of Figure 1).

The system is designed to optimize the performance of the HVAC system 114 installed in the premises 108 like an airport, commercial building, a shopping mall, an office space, or industrial facility. It aims to improve energy efficiency while maintaining or improving thermal comfort levels for the occupants. In an embodiment, the control interface 120 may serve as the command center for the HVAC system 114, where adjustments to the system's operation are made. In an embodiment, the HVAC system 114 may include one or more mechanical and electronic components that provide heating, ventilation, and air conditioning to the premises 108. In an embodiment, the data capture and monitoring system 302 may be powered by an array of the sensors and IoT devices 116, and continuously gather data on environmental conditions (like temperature, air speed, humidity), occupancy, nationality, clothing insulation, metabolic activity, and system performance (like energy consumption, operational status of HVAC components). In an embodiment, the database 104 serves as a repository for all data collected by the data capture and monitoring system 302. It is structured to store and organize data such as temperature readings, humidity levels, air speed, energy usage statistics, and system operational logs. In an embodiment, the RL agent 202 is a computational model that receives state data in real-time from the database 104, or from a physical environment (i.e., from the data capture and monitoring system 302), or from a virtual environment (i.e., from the digital twin 112), or any combination thereof. The state may represent the current conditions within the premises 108, including at least one of the air temperature, radiant temperature, air humidity, air speed, clothing insulation, metabolic activity, nationality, occupancy levels, and time of day. Using this state information, the RL agent 202 may apply its learned policy to decide on the optimal actions to take to achieve its objectives, such as energy savings while ensuring thermal comfort levels. For example, if state data indicates that a zone within the premises 108 is unoccupied and the temperature is cooler than the set comfort level, an action might be to reduce the airflow to that zone to save energy.

In some embodiments, once the RL agent 202 proposes the actions, these actions may go through a validation process within the post-processing module 304. This may include simulated testing against the software environment or digital twin 112 of the HVAC system 114 to ensure that the proposed actions will have the desired effect without causing system instability or discomfort. If the actions are successfully validated, then the post-processing module 304 may confirm that they are safe and effective to implement. Upon successful validation, the post-processing module 304 or the RL agent 202 or the database 104 may communicate the approved actions to the control interface 120. This communication may occur over a wired or wireless network 110, using standard protocols to ensure interoperability between different system components. Further, in an embodiment, the control interface 120 may be configured to translate the received actions into specific commands for the HVAC system 114. If the action involves reducing airflow to an unoccupied zone, the control interface 120 may send a command to a damper actuator within the air handling unit serving that zone, instructing it to modulate to a more closed position.

### Operational Examples:

Consider an airport where different zones have varying occupancy and environmental conditions throughout the day. The RL agent 202 receives state data indicating that the check-in area is experiencing lower occupancy with a higher-than-necessary temperature setpoint. It decides to reduce the temperature setpoint and decrease the fan speed to conserve energy. The post-processing module 304, after validating these actions, confirms that these changes won't negatively impact other zones or overall comfort. It then sends the commands to the control interface 120, which adjusts the air handling unit servicing the check-in area accordingly. By implementing this series of steps, the system can continuously and dynamically optimize the HVAC system's performance, responding in real-time to changing conditions and demands within the premises 108, while ensuring that any changes made align with the overall goals of energy efficiency and thermal comfort.

In a shopping mall, the RL agent 202 receives data indicating that certain stores are closed, and foot traffic is low in a specific wing. To optimize energy use, the RL agent 202 commands a reduction in HVAC output in that area. When a new store opens and foot traffic increases, sensors relay this information, and the system responds by adjusting the temperature to accommodate the additional heat generated by more people, all while ensuring that comfort levels remain high for shoppers and staff.

In a warehouse with varying temperature requirements for different goods, the RL agent 202 learns that energy consumption peaks during the midday loading and unloading of goods. It suggests pre-cooling the space during off-peak hours and reduces cooling when outdoor temperatures drop. When the sensors detect a section of the warehouse is currently not in use, the RL agent 202 adjusts the HVAC output to maintain a basic environmental standard, thus saving energy while preserving the quality of stored goods.

In a hotel, the RL agent 202 analyzes occupancy data from the booking system and environmental data from in-room sensors. It recognizes that certain floors are unoccupied during the off-season and minimizes HVAC use there. For occupied rooms, the system ensures that temperatures are adjusted according to guest preferences, which are learned over time and through direct feedback. When a large event occurs in the hotel's conference center, the system anticipates the need for increased ventilation and cooling to maintain comfort.

In a hospital, the RL agent 202 must balance stringent climate control for patient safety and comfort with energy efficiency. It processes real-time data from operating rooms, patient rooms, and common areas. If a patient ward is less occupied, the system slightly adjusts temperatures without compromising patient care. In areas requiring strict temperature control, like storage for medications or operating rooms, the system ensures the environment remains within precise parameters, only adjusting when it is safe and efficient.

An office building uses the system to adjust to the daily influx of employees and meetings. In the morning, the system gradually increases HVAC activity in anticipation of employee arrival. Throughout the day, occupancy sensors inform the RL agent 202 of a specific room usage, and accordingly the unused conference rooms are set to energy-saving modes while occupied areas are adjusted for optimal comfort. If the system predicts lower occupancy on a particular day, it preempts this by setting a more energy-efficient operation schedule.

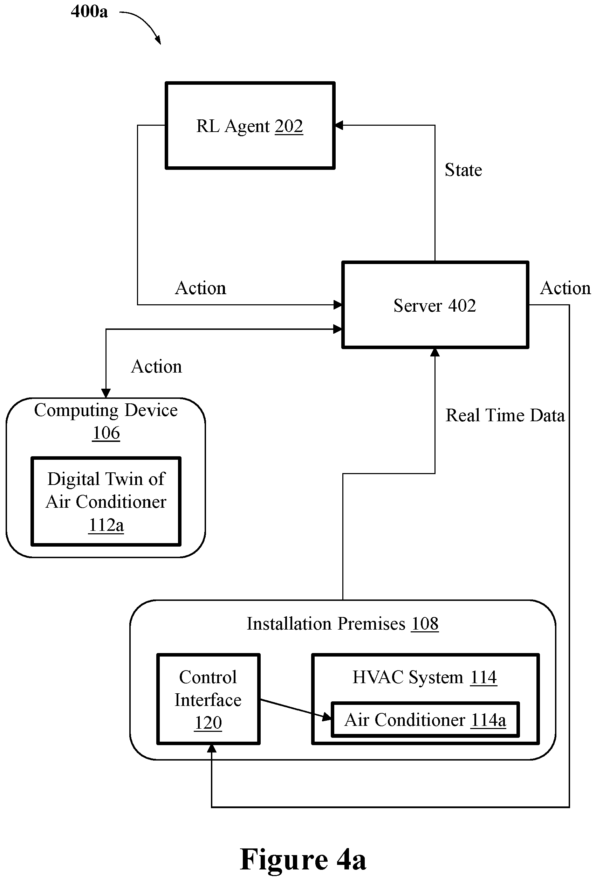

Figure 4a is a diagram 400a that illustrates optimization of an air conditioner 114a of the HVAC system 114 by utilizing the RL agent 202, in accordance with an embodiment of the present invention. In context of optimizing the air conditioner 114a within the HVAC system 114, the optimization system environment works through a series of data capture, analysis, and action steps. In an exemplary embodiment, the data such as environmental data, occupancy data, and/or HVAC performance data may be captured from the premises 108 of the HVAC system 114. For example, for capturing the environmental data, a group of sensors may be placed throughout the premises 108 to measure air temperature, radiant temperature, humidity, air speed, and the like. Further, for capturing the occupancy data, a group of occupancy sensors, which can be passive infrared (PIR) sensors or camera-based vision systems, may be placed in one or more zones of the premises 108 to track the presence and movement of one or more individuals in the one or more zones. Further, the HVAC performance data may include readings from the air conditioner itself, such as compressor speed, refrigerant pressures, and temperatures of air entering and leaving the unit. If any sensor fails or data is incomplete, a server 402 may be configured to estimate the missing data using machine learning models trained on historical data. The server 402 may correspond to the application server 102, the database server 104, or a combination thereof without limiting the scope of the present invention.

After capturing the data from the premises 108, the captured data may be communicated to the server 402 by the data capturing and monitoring system (realized by the group of sensors and IoT devices 116 installed in the premises 108). The server 402 may receive the captured data and store in its memory. The server 402 may be further configured to calculate the PMV value of each zone. The PMV value may integrate multiple factors obtained from the sensors or estimated by models, such as air temperature, radiant temperature, air speed, humidity, clothing insulation, and metabolic rate. The server 402 may be configured to process this information using one or more PMV algorithms to estimate the thermal comfort of the occupants in each zone and communicate the PMV value (i.e., the thermal comfort) and the occupancy patterns to the RL agent 202.

Further, in an embodiment, the server 402 may be configured to generate the state data that is given as input to the RL agent 202. The state data is a comprehensive structured dataset that represents the current conditions, which the RL agent 202 uses to make decisions. It may include at least one or more of the environmental conditions, occupancy patterns, PMV value(s), KPIs (such as energy usage, required PMV range, cost efficiency, HVAC uptime, or the like), and actionable parameters (such as current setpoints for the air conditioner, operational modes, fan speeds, damper positions, or the like). The server 402 may use a combination of data aggregation and preprocessing to convert the raw sensor or manual data into meaningful KPIs and actionable parameters.

Further, in an embodiment, the RL agent 202 may be configured to use the state data to assess the current status against desired outcomes. The RL agent 202 may process this data through a neural network or a similar machine learning model to predict the consequences of potential actions. Based on the assessment, the RL agent 202 may choose a policy, which is essentially a strategy consisting of actions aimed at optimizing the HVAC system's (114) performance. The actions may include, but are not limited to, changing setpoints (i.e., adjusting the temperature the air conditioner should maintain), altering fan speeds (i.e., optimizing airflow based on occupancy and environmental conditions), and scheduling adjustments (i.e., timing the air conditioner's operation to match occupancy patterns for energy savings.

After selecting the policy and identifying the actions by the RL agent 202, the server 402 may receive the identified actions from the RL agent 202. The server 402 may use the post-processing module 304 or the digital twin 112a to validate the actions suggested by the RL agent 202. For example, the digital twin 112a simulates the actions to predict their impact on system performance and occupant comfort. Once the actions are successfully validated, these actions may be communicated to the control interface 120 of the HVAC system 114. The control interface 120 may be configured to convert the actions into control commands specific to the air conditioner 114a and to other HVAC components, like dampers or auxiliary heating elements, to execute the commands, if applicable. These commands might direct the air conditioner 114a to change the temperature setpoint, adjust the fan speed, or enter a different operational mode. The control commands may be executed by the air conditioner 114a, with feedback loops confirming the actions have been carried out and monitoring the results. If the outcomes align with the desired objectives, the RL agent's (202) policy is reinforced. If not, the RL agent 202 adjusts its policy accordingly. Throughout the optimization process, the system is effectively learning and improving, ensuring that the air conditioner 114a operates at peak efficiency while providing a comfortable thermal environment for the occupants. Further, each step is designed to ensure that system optimizations contribute to the overall goal of energy efficiency and occupant comfort, without compromising system integrity or performance. This creates a closed-loop system that is adaptive, intelligent, and responsive to both the immediate and predicted future states of the installation environment.

Similar to the above, the air conditioner 114a in Figure 4a may be replaced by a compressor (not shown) to illustrate optimization of the compressor of the HVAC system 114 by utilizing the RL agent 202, in accordance with an embodiment of the present invention. For optimizing the compressor within the HVAC system 114, the operational environment is similar to that of the air conditioner 114a (as shown in Figure 4a) but with specific focus on the compressor's performance and efficiency. The sensors measure suction and discharge pressures, temperatures, compressor speed, and electrical parameters like current and voltage to monitor the compressor's condition. Further, vibration sensors may also be included to predict maintenance needs. While the compressor itself does not directly influence the PMV, its performance impacts the overall HVAC system's (114) ability to maintain the desired thermal comfort. Therefore, the PMV calculation remains an essential factor in deciding how the compressor should operate. The state data for the compressor may include the sensor readings, along with the operational status of the HVAC system 114, like cooling demand across different zones, which is inferred from the PMV calculations and occupancy patterns. The RL agent 202 may be configured to analyze the state data, particularly focusing on performance indicators such as power consumption, cooling capacity, and efficiency ratios of the compressor. It predicts how changes in compressor operation could impact these factors and the overall energy consumption of the HVAC system 114. From this analysis, the RL agent 202 may select a policy consisting of actions that might include modulating the compressor speed, changing the loading stages of the compressor for systems with multiple stages, or adjusting the refrigerant flow rate via electronic expansion valves. The server's post-processing module 304 or the digital twin 112b on the computing device 106 may then validate the suggested actions by simulating the compressor's performance with the new parameters. It assesses the potential energy savings against possible wear and tear or increased maintenance needs. Once the actions are validated, they are translated into control commands for the compressor through the control interface 120. This could involve sending signals to variable frequency drives (VFDs) to adjust compressor speeds or to the expansion valves to manage refrigerant flow. The execution of these commands is closely monitored to ensure they achieve the desired energy efficiency while maintaining system reliability and extending the compressor's life. Throughout this process, the RL agent 202 learns from the outcomes of its actions to refine its policy, aiming for the optimal balance between energy consumption, maintenance costs, and system performance. This continuous loop of monitoring, decision-making, and action-taking forms a smart, adaptive control system specifically tailored to the compressor within the HVAC framework.

Similarly, the air conditioner 114a in Figure 4a may be replaced by a condenser to illustrate optimization of the condenser (not shown) of the HVAC system 114 by utilizing the RL agent 202, in accordance with an embodiment of the present invention. For the condenser, optimization needs managing heat rejection efficiently while minimizing energy consumption. In an embodiment, the sensors in and around the condenser may gather data such as refrigerant temperature and pressure at the inlet and outlet, air temperature entering and leaving the condenser, and the condenser fan speed and power consumption. Additional environmental data, like the outside air temperature and humidity, may also be captured because they directly influence condenser performance. Further, the server 402 may generate the state data for use by the RL agent 202. The state data may include the sensor data combined with information from the rest of the HVAC system 114, such as the cooling load demand and the operation of the compressor, which directly affects the condenser's load. The RL agent 202 may be configured to process this information to understand the current operating conditions of the condenser. It assesses performance metrics like the efficiency of heat transfer, the approach temperature (difference between the outlet refrigerant temperature and the ambient air), and the condenser's energy consumption. Based on its analysis, the RL agent 202 may select a policy consisting of actions to optimize the condenser's operation. This may involve adjusting the fan speed to control airflow through the condenser coils or modulating the condenser water valves in water-cooled systems for optimal heat rejection based on current thermal loads and external temperatures. Before implementing these actions, they are validated using the digital twin 112c or the post-processing module 304 that simulates the effects of the adjustments on the condenser's performance. This step ensures that any changes lead to improved efficiency without negatively impacting the lifespan or performance of the condenser or the HVAC system 114 as a whole. Validated actions may then be communicated to the control interface 120, which translates them into operational commands for the condenser, like modulating fan speeds or adjusting water flow rates. These commands are enacted in real-time, and the system continuously monitors the results to ensure that the desired outcomes, such as reduced energy usage and maintained comfort levels, are achieved. This optimization process is dynamic, with the RL agent 202 constantly learning and adapting its policies to respond to changing environmental conditions and system demands. By doing so, it ensures that the condenser operates at peak efficiency, contributing to the overall energy conservation goals of the HVAC system 114.

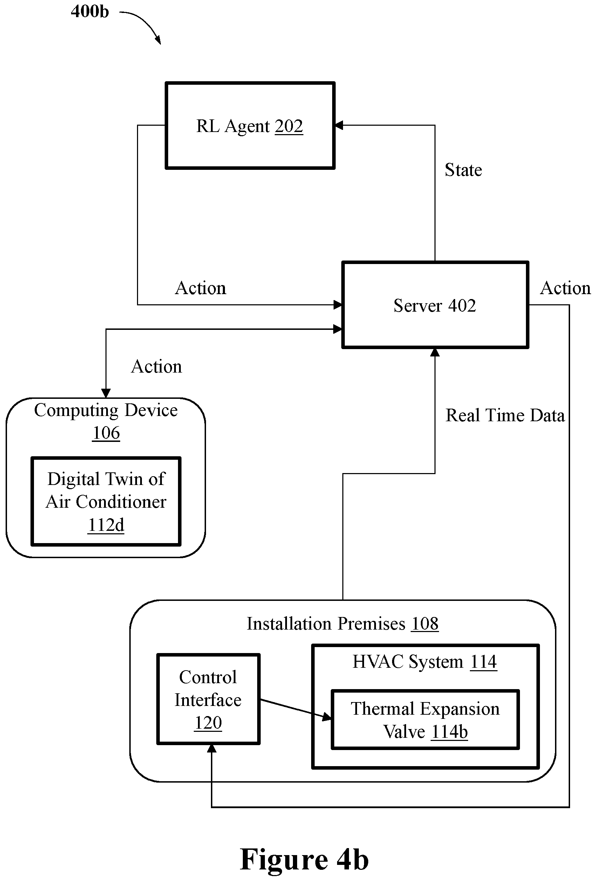

Figure 4b is a diagram 400b that illustrates optimization of a thermal expansion valve (TXV) 114b of the HVAC system 114 by utilizing the RL agent 202, in accordance with an embodiment of the present invention. The TXV 114b is a precision device used to regulate the flow of refrigerant into the evaporator while maintaining the optimal superheat level. Optimizing the TXV's performance is critical for maintaining the efficiency of the refrigeration cycle and ensuring the system responds accurately to varying thermal loads. To optimize the TXV 114b, sensors are installed to measure the refrigerant's temperature and pressure before and after the evaporator, the superheat (the temperature of refrigerant vapor above its saturation temperature), and the subcooling (the temperature decrease of the refrigerant liquid below its condensation temperature). Additional sensors may monitor the ambient temperature and the evaporator coil temperature. Further, the server 402 may generate the state data for use by the RL agent 202. The state data for the TXV 114b may include the measurements from these sensors, as well as broader system data such as the cooling load requirements, evaporator fan speeds, and the functioning status of the compressor. This holistic view of the system's status is essential for understanding the conditions under which the TXV 114b may operate. The RL agent 202 may be configured to process the state data to ascertain the current performance of the TXV 114b. It analyzes factors such as the superheat level to determine if the refrigerant is being metered correctly into the evaporator and if there are any signs of inefficiency or impending problems within the refrigeration cycle. Based on this analysis, the RL agent 202 may formulate a policy that includes specific actions to adjust the TXV 114b for optimal performance. Actions might involve modifying the TXV opening to achieve the desired superheat level according to the current thermal load, which would ensure the refrigerant absorbs the maximum amount of heat without causing any liquid refrigerant to return to the compressor. The proposed actions may undergo validation through a simulation in the digital twin 112d or the post-processing module 304, which models the expected performance after adjustments. This validation process ensures the TXV 114b operates within safe parameters and contributes effectively to the system's energy efficiency. Once validated, the actions are communicated to the control interface 120, which implements the adjustments to the TXV 114b. The control system carefully executes these changes to avoid overcorrection and stabilize the system's response to dynamic conditions. Continuously, the RL agent 202 may review the outcomes of its actions to learn and refine its strategies for TXV optimization. This ensures that the TXV's adjustments help achieve energy savings and maintain comfort levels without causing undue stress on the system, balancing efficiency with reliability.

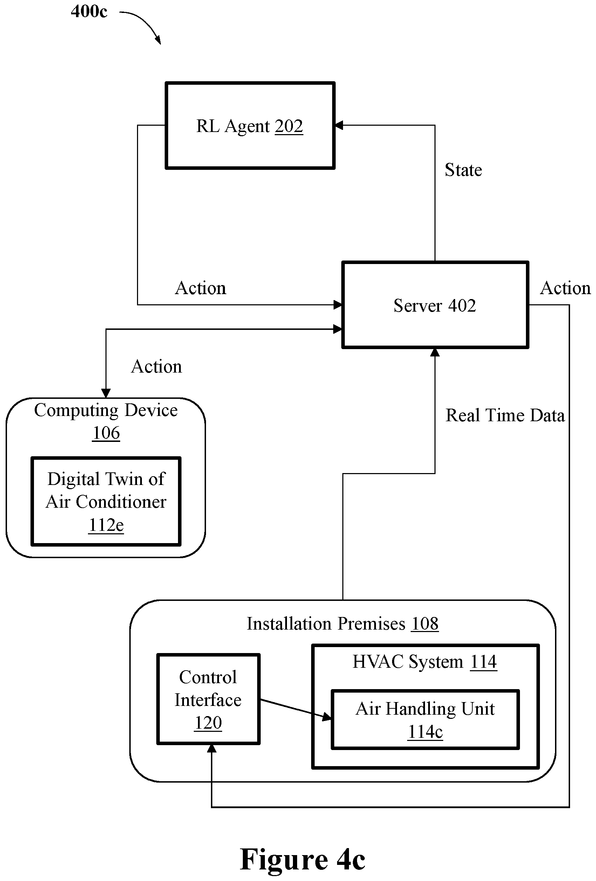

Figure 4c is a diagram 400c that illustrates optimization of an air handling unit (AHU) 114c of the HVAC system 114 by utilizing the RL agent 202, in accordance with an embodiment of the present invention. The AHU 114c is a central component that conditions and circulates air as part of the HVAC system 114. The AHU 114c takes in outside air, reconditions it (by heating or cooling), and supplies it as fresh air to the air-conditioned space. It typically houses a blower, heating or cooling elements, filter racks or chambers, sound attenuators, and dampers. In an embodiment, the sensors within and around the AHU 114c may collect data on air temperature, flow rate, filter status, and system performance. This information helps in assessing the efficiency and operational status of the AHU 114c. Further, the server 402 may generate the state data for use by the RL agent 202. The state data may include the sensor readings as well as the performance indicators like energy usage, air quality parameters, and maintenance logs. The data points reflect the current operating conditions, allowing for a comprehensive understanding of the unit's performance. Further, the RL agent 202 may be configured to process the state data to determine the AHU's operational efficacy. It considers factors such as air flow consistency, temperature differential, and the condition of filters, along with the overall energy consumption, to evaluate the AHU's efficiency. From this data, the RL agent 202 may select a policy that includes actions such as adjusting the damper positions for optimal air mix, modifying fan speeds for energy efficiency, or scheduling filter changes to maintain air quality. The RL agent 202 aims to improve the air quality and thermal comfort while minimizing energy use. Before implementation, these actions may be validated through simulations in the digital twin 112e or by the post-processing module 304 that predicts the outcomes based on the proposed adjustments. This validation is crucial to ensure that the changes will positively impact performance without disrupting system stability. Further, validated actions may then be communicated to the control interface 120. The control system enacts these adjustments carefully, considering the feedback loop to ensure desired environmental conditions are met efficiently. The control commands might direct the blower to change speed, alter the position of dampers, or signal maintenance activities. The RL agent 202 monitors the impact of its prescribed actions and uses this feedback to optimize future decisions, aiming for continuous improvement in the AHU's operation. This closed-loop process helps maintain the balance between indoor air quality, thermal comfort, and energy consumption within the HVAC system 114.

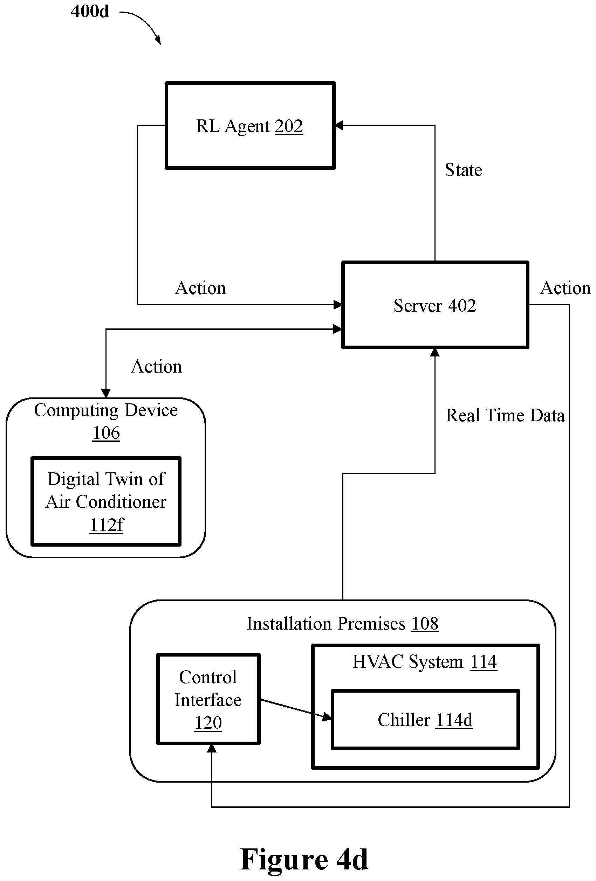

Figure 4d is a diagram 400d that illustrates optimization of a chiller 114d of the HVAC system 114 by utilizing the RL agent 202, in accordance with an embodiment of the present invention. The chiller 114d is an essential component of the HVAC system 114, especially in larger installations like airports, malls, warehouses, and commercial or industrial buildings. Its primary function is to remove heat from the indoor air through the refrigeration cycle. This is typically achieved by circulating a chilled fluid (usually water or a water-glycol mixture) that absorbs heat from the spaces and then expels it outside. To monitor the chiller's performance, various sensors may be installed to measure parameters such as inlet and outlet water temperatures, flow rates, compressor operation parameters, and energy consumption. These sensors may provide a continuous stream of data that reflects the operational state of the chiller 114d. Further, the server 402 may generate the state data for use by the RL agent 202. The state data may include real-time sensor readings and performance metrics, such as the efficiency of heat exchange, rate of chilled water circulation, and overall power usage. This data is critical for understanding the load on the chiller 114d and its effectiveness in maintaining the desired indoor conditions. The RL agent 202 may be configured to analyze this state data to determine how well the chiller 114d is performing and identifies opportunities for optimization. It may assess whether the chiller 114d is operating within its optimal performance curve and if the energy consumed is proportional to the cooling delivered. Based on its analysis, the RL agent 202 may select a policy comprising actions to optimize the chiller's performance. These could include adjusting the chilled water flow rate, changing the setpoint temperatures, modulating compressor speeds, or scheduling maintenance to prevent fouling in heat exchanger surfaces. The proposed actions may undergo validation through either the digital twin 112f or the post-processing module 304. This validation step ensures that the suggested adjustments will indeed enhance the chiller's efficiency without causing undue strain on the system. Once validated, the control commands derived from the RL agent's (202) actions are sent to the chiller's control interface 120. The control systems then enact the necessary adjustments, such as modulating valves or changing compressor operation modes. This implementation is closely monitored to ensure the changes achieve the intended energy savings while maintaining or improving cooling performance. The RL agent 202 continuously learns from the outcomes of its decisions, using this feedback to refine its future action policies, with the goal of enhancing the chiller's contribution to an energy-efficient and effective HVAC system 114.

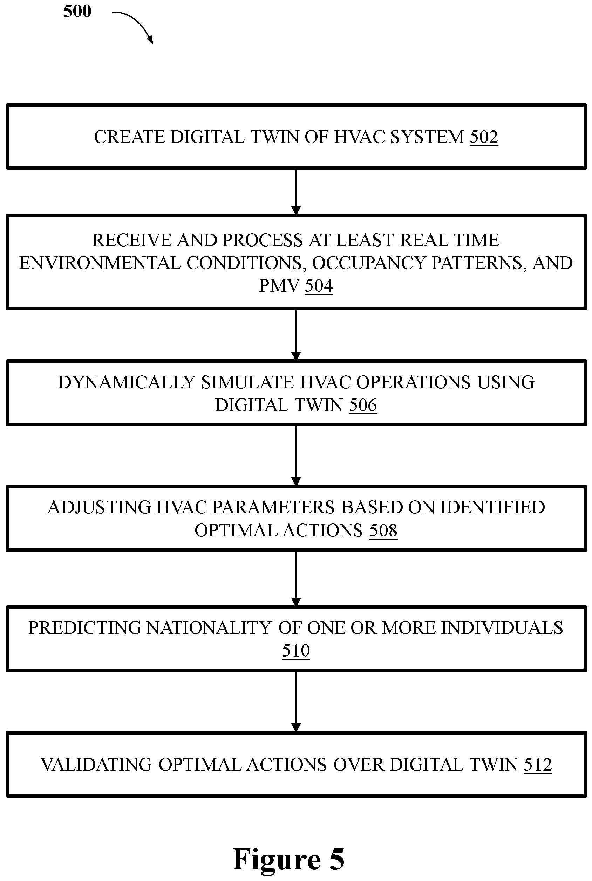

Figure 5 is a diagram that illustrates a flowchart 500 of a method for optimizing the HVAC system 114, in accordance with an embodiment of the present invention.

At step 502, the digital twin 112 of the HVAC system 114 is created. The digital twin 112 may be created based on the design parameters, operational data, and PMV-based thermal comfort analysis. The design parameters may include specifications of at least one of an air conditioner, a compressor, a condenser, a thermal expansion valve, an air handling unit, air filter and a chiller unit of the HVAC system 114. The operational data may include real-time data related to at least one of coil temperatures, return air temperature, supply air temperature, chilled water supply temperature, chilled water return temperature, zone temperatures, pump flow rate, fan differential pressure, and chiller pump pressures. In an embodiment, the digital twin 112 may be simulated by using a physics-based model, a mathematics-based model, and a data-based model. Further, in an embodiment, the digital twin 112 may employ cloud-based storage and processing, enabling seamless collaboration and data sharing among multiple stakeholders involved in the premises management.

At step 504, at least environmental conditions, occupancy patterns, and PMV value are received and processed in real-time. The RL agent 202 may be configured to receive and process at least environmental conditions, occupancy patterns, and PMV value associated with the premises 108 of the HVAC system 114, identifying the one or more optimal actions to adjust the one or more HVAC parameters of the HVAC system 114. The environmental conditions may include at least air temperature, radiant temperature, air humidity, air speed, clothing insulation, and metabolic activity. In an embodiment, the PMV value may be calculated based on the air temperature, radiant temperature, air humidity, air speed, clothing insulation, and metabolic activity. Further, the PMV value may be adjusted based on the occupancy patterns to reflect anticipated thermal comfort needs of the one or more individuals. In one exemplary scenario, by considering the occupancy patterns, the PMV calculations may be refined to improve thermal comfort in several ways: (1) tailoring to specific zones: different areas of the premises 108 may have varying occupancy patterns. For example, a conference room may be fully occupied during meetings but empty at other times. By adjusting the HVAC system 114 based on the predicted occupancy, the PMV may be more closely aligned with the actual comfort needs of the occupants, (2) adjusting setpoints dynamically: occupancy patterns may be used to dynamically adjust temperature setpoints. For instance, in a less occupied zone, the temperature setpoint may be widened to save energy without compromising comfort, as fewer people are affected, (3) ventilation control: higher occupancy leads to increased CO2 levels and potential discomfort due to stale air, thus by monitoring occupancy, ventilation may be increased to improve air quality and thus influence the perceived thermal comfort (which is a component of PMV), (4) load forecasting: knowing occupancy patterns may help in predicting thermal loads, allowing the HVAC system 114 to pre-emptively adjust its operations to maintain a steady and comfortable environment as the occupants move in and out of different areas, (5) personalized comfort: in sophisticated systems, individual preferences can be accounted for in areas where occupancy patterns are predictable. For example, if an area is regularly used by a particular group with known comfort preferences, the PMV may be adjusted accordingly, and (6) energy efficiency: by considering occupancy patterns, the HVAC system 114 may operate at reduced capacity when fewer people are present, thus saving energy while maintaining comfort levels for those who are in the space. Incorporating occupancy patterns into the PMV calculations means that the HVAC system 114 is not just responding to physical measurements like temperature and humidity, but also to the actual use of the space, creating a more responsive and occupant-centered approach to thermal comfort.

At step 506, the HVAC operations may be dynamically simulated. In an embodiment, the HVAC operations may be dynamically simulated using the digital twin 112 driven by the identified optimal actions.

At step 508, the HVAC parameters may be adjusted based on the identified optimal actions, ensuring adaptive thermal comfort and energy efficiency management within the premises 108.

At step 510, the nationality of the one or more individuals may be predicted, and then using this to compute nationality-specific thermal comfort indices for PMV calculation.

At step 512, the identified optimal actions may be validated over the digital twin 112. Then, post the successful validation, the identified optimal actions are communicated from the RL agent 202 to the control interface 120 accessible to the one or more HVAC equipment, enabling seamless integration with the one or more HVAC equipment, and further enabling automated adjustments to at least one of temperature, fan speed, and other operational parameters in response to changing conditions.

The disclosed optimization system offers several advantages, including enhanced energy efficiency, improved thermal comfort, and adaptive control. By using a reinforcement learning agent (the RL agent 202) in conjunction with a digital twin (the digital twin 112), the system can process complex variables in real-time, such as occupancy patterns, environmental conditions, PMV values, equipment operational data, and/or nationality of the occupants, enabling it to make informed decisions that optimize HVAC performance. This leads to significant energy savings by avoiding overcooling or overheating and by making adjustments tailored to actual usage patterns. Additionally, by maintaining optimal PMV values, the system ensures a consistently comfortable environment for the occupants, which can contribute to better productivity in workplaces and improved satisfaction in commercial settings. The integration of IoT devices allows for granular data collection, which further refines the system's decision-making process. Further, the disclosed systems and methods can be implemented in a wide range of environments. They are particularly beneficial in settings where both comfort and energy usage are critical concerns, such as in airports, commercial buildings, hospitals, museums, data centers, warehouses, educational institutions, and the like. In industries such as manufacturing, where environmental conditions can affect production quality, this system can maintain stringent climate control for optimal operation. In residential buildings, it can provide personalized comfort while managing energy bills. Furthermore, the system can be adapted for use in smart city infrastructure to optimize climate control across multiple buildings, reducing the overall environmental footprint. The advantages of predictive maintenance, increased system longevity, and energy management make it a versatile solution across numerous sectors.

While the present system has been described with reference to exemplary embodiments, it should also be appreciated that numerous modifications and alternative embodiments may be devised by those having ordinary skill in the art without departing from the broader and intended spirit and scope of the present system as set forth in the claims that follow.

## Claims

1. A system for HVAC (Heating, Ventilation, and Air Conditioning) optimization, the system (100) comprising:
a digital twin (112) of an HVAC system (114), wherein the digital twin (112) is simulated based on at least design parameters, operational data, and PMV (Predicted Mean Vote) based thermal comfort analysis; and
a reinforcement learning (RL) agent (202) configured to receive and process at least real time environmental conditions, occupancy patterns, and a PMV value associated with an installation premises (108) of the HVAC system (114), identifying one or more optimal actions to adjust one or more HVAC parameters of the HVAC system (114), wherein the digital twin (112), driven by the identified optimal actions, dynamically simulates the HVAC system (114), and wherein the RL agent (202) optimizes operations of the HVAC system (114) based on the identified optimal actions, ensuring adaptive thermal comfort and energy efficiency management within the installation premises (108).

2. The system (100) according to claim 1, wherein the digital twin (112) is simulated by using a physics-based model, a mathematics-based model, and a data-based model.

3. The system (100) according to claim 1, further comprising one or more sensors and IoT (Internet of Things) devices (116) placed within the installation premises (108) to capture real-time data including at least the environmental conditions, occupancy patterns, and operational data.

4. The system (100) according to claim 1, wherein the PMV value is calculated based on at least real-time monitoring of air temperature, radiant temperature, air humidity, air speed, clothing insulation, and metabolic activity, utilizing sensors and IoT devices (116) distributed throughout the installation premises (108), and wherein the PMV value is adjusted based on the occupancy patterns to reflect anticipated thermal comfort needs of one or more individuals.

5. The system (100) according to claim 4, further comprising a nationality prediction device (118) for predicting nationality of the one or more individuals, wherein the predicted nationality is used for real time computation of nationality-specific thermal comfort indices, enabling the PMV calculation to account for cultural preferences in the thermal comfort.

6. The system (100) according to claim 4, wherein the PMV calculation integrates occupant feedback data, gathered through user interfaces, to refine accuracy of thermal comfort predictions.

7. The system (100) according to claim 4, wherein the PMV calculation employs one or more machine learning algorithms to analyze at least the monitored data and historical PMV data, enhancing the system's ability to predict thermal comfort requirements under varying conditions.

8. The system (100) according to claim 1, wherein the RL agent (202) utilizes the PMV value, energy consumption, and air differential pressure as an objective function, optimizing the HVAC parameters to achieve desired PMV levels within the installation premises (108).

9. The system (100) according to claim 8, wherein the RL agent (202) adapts its strategies based on historical PMV convergence, ensuring continuous improvement in balancing the thermal comfort and energy efficiency.

10. The system (100) according to claim 8, wherein the RL agent (202) incorporates PMV mapping data to dynamically adjust temperature and airflow settings in different zones of the installation premises (108), responding to diverse thermal comfort requirements.

11. The system (100) according to claim 8, wherein the RL agent (202) integrates the PMV value with the occupancy patterns, optimizing HVAC operations to accommodate movement of one or more individuals within the installation premises (108), ensuring consistent thermal comfort levels.

12. The system (100) according to claim 8, wherein the RL agent (202) generates the optimal actions to converge to the relevant PMV and reduce power consumption by simulating various HVAC scenarios based on the real time environmental data, occupancy patterns, and PMV values.

13. The system (100) according to claim 12, wherein the optimal actions include adaptive HVAC parameter suggestions, providing instant recommendations for adjusting temperature, airflow, and operation of one or more HVAC equipment of the HVAC system (114) to achieve the optimal thermal comfort and energy efficiency.

14. The system (100) according to claim 13, wherein the optimal actions are validated over the digital twin (112), and then from the RL agent (202) are communicated to a control interface (120) accessible to the one or more HVAC equipment, enabling seamless integration with the one or more HVAC equipment, and further enabling automated adjustments to at least one of temperature, fan speed, and other operational parameters in response to changing conditions.

15. The system (100) according to claim 1, wherein the design parameters include specifications of at least one of an air conditioner (114a), a thermal expansion valve (114b), an air handling unit (114c), and a chiller unit (114d) of the HVAC system (114),
wherein the operational data includes real-time data related to at least one of coil temperatures, return air temperature, supply air temperature, chilled water supply temperature, chilled water return temperature, zone temperatures, pump flow rate, fan differential pressure, and chiller pump pressures, and
wherein the environmental conditions include at least air temperature, radiant temperature, air humidity, air speed, clothing insulation, and metabolic activity.
